(19) Europäisches Patentamt

European Patent Office

Office européen des brevets

(11) **EP 0 731 333 B1**

(12) **EUROPÄISCHE PATENTSCHRIFT**

(45) Veröffentlichungstag und Bekanntmachung des Hinweises auf die Patenterteilung:
**31.01.2001   Patentblatt 2001/05**

(51) Int Cl.$^7$: **G01B 5/012**

(21) Anmeldenummer: **95103461.0**

(22) Anmeldetag: **10.03.1995**

(54) **Mehrkoordinaten-Tastkopf mit gleichen Auslenkungen**

Multi-coordinate feeler head with equal displacements

Tête de palpage à plusieurs coordonnées avec déplacements égaux

(84) Benannte Vertragsstaaten:
**AT CH DE FR GB IT LI**

(43) Veröffentlichungstag der Anmeldung:
**11.09.1996   Patentblatt 1996/37**

(73) Patentinhaber: **Dr. Johannes Heidenhain GmbH
83292 Traunreut (DE)**

(72) Erfinder: **Feichtinger, Kurt
D-83349 Palling (DE)**

(56) Entgegenhaltungen:
**EP-A- 0 438 095        EP-A- 0 439 296
EP-A- 0 506 306        EP-A- 0 598 709
WO-A-89/07745**

- **FEINWERKTECHNIK & MESSTECHNIK, Bd. 87, Nr. 1, Januar 1979 - Februar 1979 DE, Seiten 5-9, A. WECKENMANN ET AL. 'Korrektur der Taststiftbiegung bei Messungen mit Mehrkoordinaten-messgeräten.'**
- **QUALITY EUROPE, Nr. 1, 1991 MUNICH, DE, Seiten 26-30, XP 000322988 A. MODJARRAD ET AL. 'Development of a small novel 3-dimensional high accuracy probe for CMMs.'**

## Beschreibung

Die Erfindung bezieht sich auf einen Mehrkoordinaten-Tastkopf gemäß dem Oberbegriff des Anspruchs 1.

Aus diversen Druckschriften sind Mehrkoordinaten-Tastköpfe bekannt. Alle verfügen über Sensoren, die bei Antastung eines Objektes ein Antastsignal liefern. Die Art der Sensoren ist unterschiedlich: Es können beispielsweise elektrische Schalter sein, oder lichtelektrische Meßsysteme oder auch Abstandssensoren. Derartige Ausführungsformen finden sich in DE-23 47 633-C3; DE-35 08 396-C1; EP-0 361 164-A1; EP- 0 598 709 A.

Bei Antastung von Objekten mittels eines derartigen Mehrkoordinaten-Tastkopfes wird ein das Objekt berührender Taststift ausgelenkt, der an seinem freien Ende eine Tastkugel trägt. Die Bauart der Sensoren und der Lagerung des Taststiftes bedingt es, daß die Generierung eines Antastsignales nach mehr oder weniger Auslenkung des Taststiftes ausgelöst wird.

Dies führt zu Meßunsicherheit. Neben einer Vielzahl von anderen Faktoren spielt dabei die Taststiftverbiegung eine große Rolle. Für die Taststiftverbiegung sind in erster Linie die Meßkräfte verantwortlich, die maßgeblich durch die Lagerung des Taststiftes bestimmt werden.

Meßkraftschwankungen verursachen bei unterschiedlicher Taststiftgeometrie auch unterschiedliche Verbiegungen, was wiederum zu größeren oder kleineren Meßabweichungen führt.

Es besteht ein linearer Zusammenhang zwischen Durchbiegung und Meßkraft. Formelmäßig läßt sich dieser Zusammenhang nach der aus der Festigkeitslehre bekannten Gleichung

$$f = F * \frac{64}{3\,\pi\,E} * \frac{T_L 3}{T_D 4}$$

mit f: Durchbiegung, F: Kraft, E: Elastizitätsmodul, $T_L$: Einspannlänge (Taststiftlänge), $T_D$: Taststiftdurchmesser für den einseitig eingespannten Biegebalken ausdrücken.

Der Erfindung liegt die Aufgabe zugrunde, den bei einem Mehrkoordinaten-Tastkopf durch Taststiftverbiegung entstehenden Meßfehler zu beseitigen, bzw. so weit zu verringern, daß er vernachlässigbar klein wird.

Diese Aufgabe wird von einem Mehrkoordinaten-Tastkopf mit den Merkmalen des Anspruches 1 gelöst. Mit den Merkmalen der abhängigen Ansprüche wird der Mehrkoordinaten-Tastkopf noch weiter ausgestaltet.

Die besonderen Vorteile des erfindungsgemäßen Mehrkoordinaten-Tastkopfes liegen in seinem einfachen Aufbau, der dennoch eine Antastrichtungsfehler-Kompensation gewährleistet.

Anhand der Zeichnungen wird die Erfindung mit Hilfe eines Ausführungsbeispieles noch näher erläutert.

Es zeigt

Figur 1     einen Mehrkoordinaten-Tastkopf;

Figur 2     ein Prinzip-Schaubild;

Figur 3     ein weiteres Prinzip-Schaubild und

Figur 4     ein Auslenkungs-Diagramm.

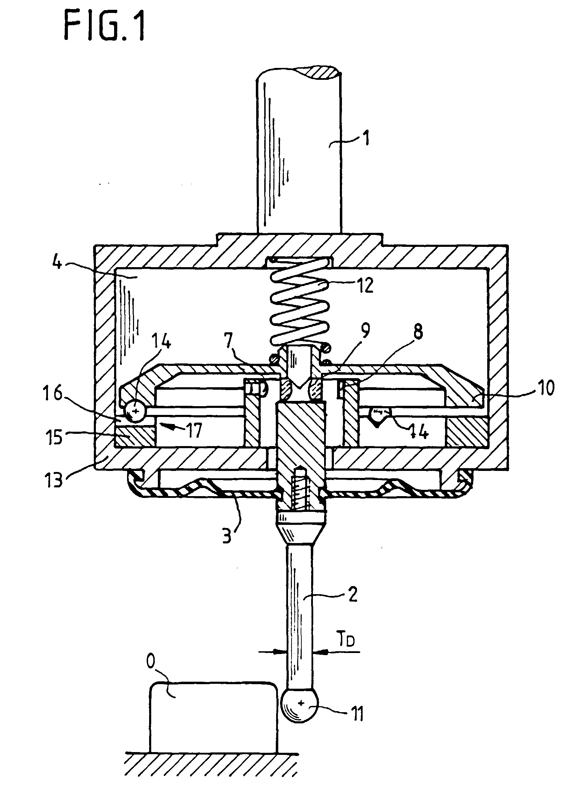

In Figur 1 ist der gesamte prinzipielle Aufbau eines Mehrkoordinaten-Tastkopfes ersichtlich. Dieser gezeigte Taster ist als schaltender Taster ausgeführt. Durch einen Schaft 1 kann der Taster in eine Spindel einer nicht dargestellten Meß- oder Bearbeitungsmaschine eingesetzt werden. Die Auslenkung eines Taststiftes 2 ist in allen Richtungen mögliche. Eine Dichtung 3 schließt den Zwischenraum zwischen einem Tastkopfgehäuse 4 und dem Taststift 2.

Eine Detektoranordnung 7, 8, 9 zur Erfassung der Auslenkung des Taststiftes 2 gibt bei einem bestimmten Auslenkungsbetrag einen Antastimpuls ab, welcher zur Steuerung einer Werkzeugmaschine, zur Bestimmung des Zeitpunktes der Meßwertübernahme einer Koordinaten-Meßmaschine hergezogen wird oder zu einem anderen Meßzweck dient. Die Detektoranordnung 7, 8, 9 besteht aus einem im Tastkopfgehäuse 4 feststehenden optischen Sender 7 und einem dazu ausgerichteten ebenfalls feststehenden Differentialphotoelement 8. In der optischen Achse der beiden Elemente 7, 8 ist ein Linsensystem 9 fest am beweglichen Taststift 2 angebracht.

Ein Meßteller 10 ist mit dem Taststift 2 fest verbunden, welcher am Ende eine Antastkugel 11 besitzt. Eine Fläche des Meßtellers 10 steht mit dem Tastkopfgehäuse 4 mittels einer Feder 12 in Verbindung. Die Gegenfläche ist ein Teil der Lagerung des Meßtellers 10 in dem Tastkopfgehäuseboden 13. Diese Lagerung muß exakt ausgeführt sein, da eine statische Unter- bzw. Überbestimmung Meßfehler verursacht.

Während eines Antastvorganges an ein Werkstück 0 wird der Meßteller 10 durch die Feder 12 an Ort und Stelle - das heißt in seiner Nullage - gehalten, wobei die Kraft der Feder 12 der Wirkung des Kontaktdrucks der Antastkugel 11 auf das Werkstück 0 entgegenwirkt, und verhindert, daß der Meßteller 10 in der Lagerung verschwenkt bzw. abgehoben wird, wenn diese Kraft unter einem bestimmten Wert liegt. Solange der Meßteller 10 gegen den Tastkopfgehäuseboden 13 durch die Feder 12 gehalten wird, bilden Meßteller 10 und Tastkopfgehäuse 4 eine Einheit mit dem Freiheitsgrad Null. Nach Beendigung einer Auslenkung wirkt die Feder 12 so belastend, daß sie den Meßteller 10 gegen den Tastkopfgehäuseboden 13 zurückführt.

Die Lagerung, ausgeführt als Mehrpunktlager - hier als Dreipunktlager -, besteht aus gleichmäßig über den Umfang des Meßtellers 10 verteilter und in einer Ebene angeordneter Kugeln 14, welche fest im Meßteller 10 verankert sind. Jeder der Kugeln 14 ist ein geeignetes Gegenlager, hier ein Prisma 15 mit einer V-förmigen Nut 16, zugeordnet.

Die Prismen 15 sind so ausgerichtet, daß ihre V-Nut 16 senkrecht zur Längsachse des in der Nullage ruhenden Taststiftes 2 verläuft, damit jede Kugel 14 definiert in die zugeordnete V-Nut 16 zu liegen kommt.

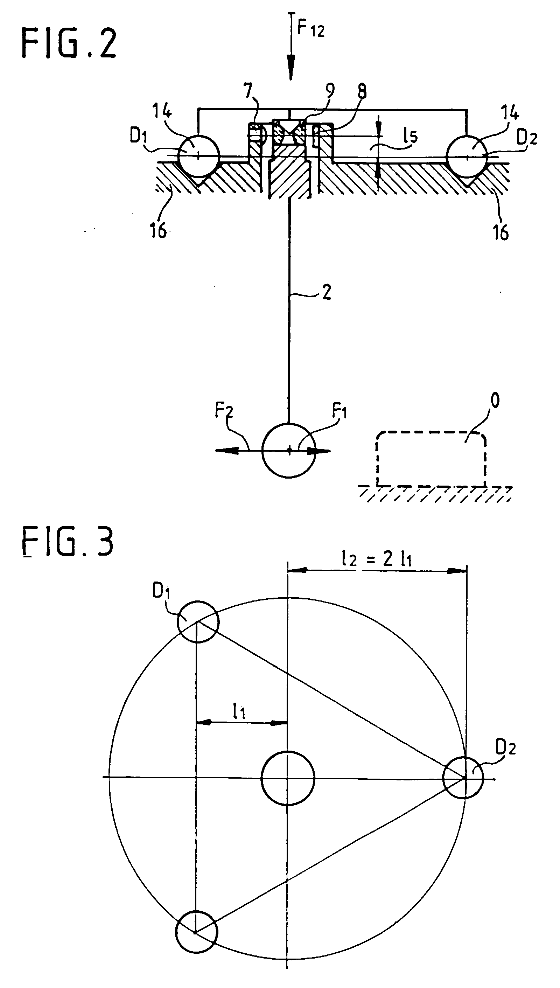

Figur 2 zeigt ein Prinzip-Schaubild, bei dem die geometrischen Verhältnisse bei einem dreipunktgelagerten Mehrkoordinaten-Tastkopf gemäß Figur 1 dargestellt sind.

Derartige Tastsysteme (Mehrkoordinaten-Tastköpfe) mit Dreipunktlagerung sind statisch bestimmt und einfach herstellbar. Sie haben jedoch die Eigenheit, daß die Auslenkkräfte richtungsabhängig um den Faktor 2 streuen. Durch diese unterschiedlichen Auslenkkräfte wird der Taststift 2 beim Antastvorgang unterschiedlich gebogen. Dieser Sachverhalt wird ausführlich in der Zeitschrift "Technisches Messen tm" im Heft 2 des Jahrganges 1979 in dem Aufsatz "Ermittlung der Meßunsicherheit von 3-D-Tastsystemen" beschrieben.

Bei einer Dreipunktlagerung ist die Arbeit um den Taststift 2 bzw. den Meßteller 10 bis zum Schaltpunkt auszulenken in allen Richtungen gleich.

Die beiden Multiplikatoren aus denen die Arbeit errechnet wird ändern sich jedoch im ungünstigsten Fall um den Faktor 2.

Dabei ist aufgrund der Hebelgesetze der Auslenkweg groß und die erforderliche Kraft klein, oder es ist der Auslenkweg klein und die erforderliche Kraft groß.

Um ein gleichmäßiges Schaltverhalten über den Bereich von 360° zu erhalten, das heißt, um aus jeder Antastrichtung die gleiche Schalt-Charakteristik (Antastrichtung-Charakteristik) zu erhalten, müssen gleiche Auslenkwege für die Antastkugel 11 erreicht werden.

Unter Auslenkung soll der Weg verstanden werden, welchen die Antastkugel 11 von der Berührung des Werkstückes (Objektes) 0 bis zum Auslösen des Auslenksignales durch den Sensor 7, 8, 9 zurücklegen muß.

Die Auslenkwege $S_R$ setzen sich aus Teilwegen, nämlich aus dem Verbiegungsweg $S_V$ und dem Auslöseweg $S_A$, zusammen. Bevor der Taststift 2 durch den Antastvorgang an das Objekt 0 aus einer seiner Lagestellen 14/16 gekippt wird, verbiegt sich der Taststift 2 um ein gewisses Maß, welches von den Antastkräften $F_1$, $F_2$ abhängig ist.

Der Sensor 7, 8, 9 befindet sich oberhalb der Ebene, in der die Lagestellen 14/16 liegen. Das Linsensystem 9 befindet sich am Meßteller 10 des Taststiftes 2. Durch den Antastvorgang des Taststiftes 2 an das Objekt 0 wird der Meßteller 10 aus seiner, der Ebene in der die Lagestellen 14/16 liegen, parallelen Ebene gekippt und bei ausreichender Kippung das Linsensystem 9 so verlagert, daß der Sensor (Detektoranordnung 7, 8, 9) ein Auslenksignal erzeugt. Das Maß, um das das Linsensystem 9 verlagert werden muß, um ein Auslenksignal hervorzurufen, ist für das Ausführungsbeispiel konstant und als Hub mit $l_5$ bezeichnet.

Aufgrund der Lagergeometrie sind die Drehachsen $D_1$ und $D_2$ unterschiedlich weit von der Achse des Taststiftes 2 entfernt. Diese Verhältnisse sind auch aus Figur 3 ersichtlich, in der der Abstand der Mittelachse des Taststiftes 2 zur Drehachse $D_1$ mit $l_1$ und der Abstand von der Mittelachse des Taststiftes 2 zur Drehachse $D_2$ mit $l_2$ bezeichnet ist, wobei $l_2 = 2l_1$ ist.

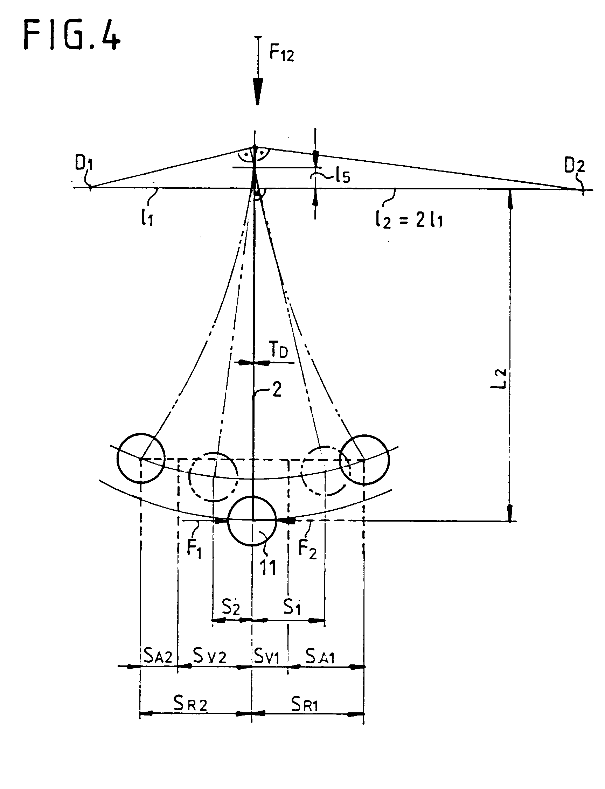

Um für den Sensor 7, 8, 9 denselben Hub $l_5$ zu erzielen, muß, wie aus Figur 4 ersichtlich ist, die Kugel 11 des Taststiftes 2 beim Kippen um die Drehachse $D_1$ um den Weg $s_1$ ausgelenkt werden (Lage der Kugel mit Strich-Doppelpunkt-Linie, dargestellt); die Auslenkung zum Kippen um den Drehpunkt $D_2$ muß jedoch um den Weg $s_2$ erfolgen (Lage der Kugel mit Strich-Punkt-Linie dargestellt). Dabei sind die Wege $s_1$ und $s_2$ umgekehrt proportional zu den Abständen $l_1$ und $l_2$, wobei $s_1$ doppelt so groß ist, wie $s_2$. Dies gilt wenn völlig steife Bauelemente angenommen werden.

Um den Taststift 2 bzw. dessen Kugel 11 um die genannten Wege $s_1$ und $s_2$ auszulenken, sind unterschiedliche Kräfte $F_1$ und $F_2$ erforderlich, die wieder umgekehrt proportional zu den genannten Wegen $s_1$ und $s_2$ sind.

Unterschiedliche Kräfte $F_1$ und $F_2$ bewirken unterschiedliche Verbiegungen des Taststiftes 2. Da - wie vorstehend bereits erläutert wurde - ein linearer Zusammenhang zwischen der Meßkraft und der Durchbiegung des Taststiftes 2 besteht, sind die Verbiegungswege $S_{V1}$ und $S_{V2}$ proportional zu den Meßkräften $F_1$ und $F_2$.

Die Auslösewege $S_{A1}$ und $S_{A2}$ entsprechen den vorgenannten Wegen $s_1$ und $s_2$ bei angenommen völlig steifen Bauelementen.

Um die Antastrichtungs-Charakteristik zu eliminieren, müssen die Auslenkwege $S_{R1}$ und $S_{R2}$ gleich groß sein. Das bedeutet, daß unabhängig von der Antastrichtung die Kugel 11 des Taststiftes 2 immer um den gleichen Betrag verlagert werden muß, um den Hub $l_5$ zu erzeugen, durch den der Sensor 7, 8, 9 das Antastsignal auslösen kann.

Da aber aufgrund der geometrischen Anordnung der Lagerstellen 14/16 - also der Lagerung des Taststiftes 2 - die Auslösewege $S_{A1}$ und $S_{A2}$ unterschiedlich groß sind (sie entsprechen ja den Wegen $s_1$ und $s_2$ und sind damit umgekehrt proportional zu den durch die Lagerung vorgegebenen Abständen $l_1$ und $l_2$), müssen die Verbiegungswege $S_{V1}$ und $S_{V2}$ diese Ungleichheit der Auslösewege $S_{A1}$ und $S_{A2}$ kompensieren. Die Auslenkwege $S_{R1}$ und $S_{R2}$ müssen gleich sein, daher müssen die Summen $S_{V1}+S_{A1}$ und $S_{V2}+S_{A2}$ der Verbiegungswege $S_{V1}$, $S_{V2}$ und der Auslösewege $S_{A1}$, $S_{A2}$ untereinander gleich sein

$(S_{R1}=S_{V1}+S_{A1}=S_{R2}=S_{V2}+S_{A2})$.

Um gleich lange resultierende Auslenkwege $S_{R1}$ und $S_{R2}$ zu erreichen, muß also unter anderem die Verbiegung des Taststiftes 2 gezielt mit in die Dimensionierung des Mehrkoordinaten-Tastkopfes mit einbezogen werden. Die gesamten Verformungs-Parameter der Einheit Taststift 2/Lagerung 17 müssen so gewählt werden, daß aufgrund der resultierenden Auslenkwege $S_{R1}$, $S_{R2}$ die Antastrichtungs-Charakteristik eliminiert wird.

Zu den Verformungsparametern der Einheit Taststift/ Lagerung gehören deren Geometrie, die Werkstoff-Eigenschaften, der Taststift-E-Modul, das Taststift-Trägheitsmoment, die Rückstellkraft, die zu erwartende Materialpaarung von Antastkugel und Werkstück wegen der Abplattung und - soweit es die Meßgenauigkeit erfordert - weitere Eigenschaften der genannten Einheit.

Die Berechnungsformeln für die Zusammenhänge zwischen den genannten Abständen $l_1$ und $l_2$, dem Hub $l_5$, den Weglängen $s_1$ und $s_2$, den Auslösewegen $S_{A1}$ und $S_{A2}$, den Verbiegungswegen $S_{V1}$ und $S_{V2}$, den resultierenden Auslenkwegen $S_{R1}$ und $S_{R2}$, der Länge $L_2$ des Taststiftes 2 und seinem Durchmesser $T_D$, dem Durchmesser der Kugel 11, den bewegten Massen und der geometrischen Anordnung der Lagerstellen 14/16 lassen sich aus der Festigkeitslehre, der Kinematik und speziell den Hebelgesetzen herleiten.

Um den Taststift 2 um den Weg $S_1$ zu verbiegen, muß bei einer Kippung um die Drehachse $D_1$ ein Moment $M_1$ wirken, welches gleich dem Produkt aus der Kraft $F_{12}$ mal dem Abstand $l_1$ ist, also $M_1=F_{12}*l_1$.

Dieses Moment ist gleich dem Moment, welches sich aus dem Produkt der Antastkraft $F_1$ und der Länge $L_2$ des Taststiftes 2 ergibt, also gilt $M_1=F_1*L_2$.

Die Verbiegung $S_1$ ergibt sich durch Umstellen der Gleichungen der Festigkeitslehre (siehe oben) zu

$$S_1 = \frac{l_5*L_2}{2*l_1} = \frac{F_1*L_2^3}{3E*\Theta}, \text{ wobei } \Theta = \frac{\pi*T_D^4}{64}$$

als Trägheitsmoment eingesetzt wird.

Ein Zahlenbeispiel soll nachfolgend in erster Näherung die Berechnung des Taststift-Durchmessers $T_D$ zeigen. Gegeben sind:

    Kraft $F_{12}$ = 10N
    Taststiftlänge $L_2$ = 60 mm
    Abstand $l_1$ = 4 mm
    Hub $l_5$ = 0,003 mm
    Taststift-Werkstoff Stahl
    E-Modul von Stahl E = 210.000 N/mm$^2$

Das Moment $M_1$ ergibt sich bei

$$M_1 = F_{12}*l_1 = 10N*4 \text{ mm}$$

$$M_1 = 40 \text{ Nmm} = 0,04 \text{ Nm}$$

Die Verbiegung ergibt sich bei

$$S_1 = \frac{l_5*L_2}{2*l_1} = \frac{0,003*60}{2*4} \text{ mm}$$

$$S_1 = 0,0225 \text{ mm} \approx 22 \text{ } \mu\text{m}$$

Diese Verbiegung ist gleich

$$S_1 = \frac{F_1*L_2^3}{L_2*3*E*\Theta} = 0.000.022 = \frac{0,04*0,06^2}{3*E*\Theta}$$

$$\Theta = \frac{0,04*0,06^2}{3*0,000022*210.000.000.000}$$

$$\Theta = 0.000.01*10^{-6} \text{ m}^4$$

$$\Theta = 0,000.01*10^{-6} = \frac{\pi*T_D^4}{64}$$

$$T_D = 0,003.8 \text{ m} \approx 4 \text{ mm}$$

Bei den gegebenen Größen errechnet sich also der Taststift-Durchmesser auf 4 mm.

**Patentansprüche**

**1.** Mehrkoordinaten-Tastkopf mit einem aus einer seine Nullage bestimmenden Lagerung auslenkbaren Taststift (2), in die er durch eine Rückstellkraft (F12) drängbar ist, wobei

-  der Taststift (2) an einem Meßteller (10) befestigt ist, welcher über die Lagerung bildende Drehachsen (D1, D2) in einem Tastkopfgehäuse (4) verschwenkbar gelagert ist
-  die Lagerung ein Mehrpunktlager aus voneinander beabstandet angeordneten Lagerstellen (14, 16) ist
-  aufgrund der voneinander beabstandeten Lagerstellen (14, 16) die Kräfte (F1, F2) zur Auslenkung des Taststiftes (2) aus seiner Nullage von der Antastrichtung des Taststiftes (2) an ein Objekt (0) abhängig sind
-  bei einer Antastung des Objektes (0) mit dem freien Ende des Taststiftes (2) in einer ersten Antastrichtung der Meßteller (10) um eine erste Drehachse (D1) und in einer zweiten Antastrichtung um eine zweite Drehachse (D2) verkippbar ist, wobei die Drehachsen (D1, D2) unterschiedlich weit von der Angriffslinie der Rückstellkraft (F12) entfernt sind

- dem freien Ende des Taststiftes (2) ein Sensor (7, 8, 9) gegenüberliegt, der die durch Antasten des Objektes (O) hervorgerufene Auslenkung des Taststiftes (2) aus seiner Nullage erfaßt und in einen Hub (15) umsetzt bei dem ein Auslenksignal erzeugbar ist, wobei die Auslenkwege (SA1, SA2), die zur Erzeugung des Auslenksignales führen, umgekehrt proportional zu den genannten Kräften (F1, F2) sind, dadurch gekennzeichnet, daß

- die Auslenkwege des Endes des Taststiftes (2) zur Abgabe des Auslenksignals beim Kippen um beide Drehachsen (D1, D2) zumindest annähernd gleich sind, wobei die durch die geometrische Anordnung der Lagerstellen (14, 16) verursachten unterschiedlichen Auslenkwege durch die Verformung der Einheit Taststift (2) und Lagerung (17) kompensiert werden, indem die geometrische Auslegung der Lagerung (17), die geometrische Gestaltung des Taststiftes (2) und deren Werkstoff-Eigenschaften - also die Verformungsparameter der Einheit Taststift (2), Lagerung (17) aufeinander abgestimmt sind.

2. Mehrkoordinaten-Tastkopf nach Anspruch 1, dadurch gekennzeichnet, daß die Angriffslinie der Rückstellkraft (F12) die Mittelachse des Taststiftes (2) ist.

3. Mehrkoordinaten-Tastkopf nach Anspruch 1 oder 2, dadurch gekennzeichnet, daß drei Lagerstellen (14, 16) gleichmäßig über den Umfang verteilt sind, und daß die erste Drehachse ($D_1$) mit dem Abstand ($l_1$) von der Angriffslinie der Rückstellkraft ($F_{12}$) entfernt ist und die zweite Drehachse ($D_2$) mit dem doppelten Abstand ($l_2$) von der Angriffslinie der Rückstellkraft ($F_{12}$) entfernt ist.

4. Mehrkoordinaten-Tastkopf nach Anspruch 3, dadurch gekennzeichnet, daß die unterschiedlichen Auslenkwege durch die Verbiegung des Taststiftes (2) kompensiert werden, indem der Durchmesser ($T_D$) des Taststiftes (2) zumindest annähernd nach folgender Beziehung gewählt ist:

$$T_D{}^4 = \frac{F_{12} \cdot l_1{}^2 \cdot L_2 \cdot 64 \cdot 2}{l_5 \cdot 3E \cdot \pi}$$

mit

$F_{12}$ = Rückstellkraft

$l_1$ = Abstand der ersten Drehachse von der Angriffslinie der Rückstellkraft ($F_{12}$)
$L_2$ = Länge des Taststiftes (2)
$l_5$ = Hub
$E$ = E-Modul des Taststift-Werkstoffes

## Claims

1. Multi-coordinate touch probe having a probe stylus (2) deflectable out of a support which determines its zero position and into which it may be pushed by a resetting force (F12); wherein

- the probe stylus (2) is secured to a measuring plate (10) which is mounted pivotable in a probe housing (4) via rotational axes (D1, D2) forming the support;
- the support is a multi-point support formed from support points (14, 16) located at a spacing from one another;
- as a result of the support points located at a spacing from one another, the forces (F1, F2) for deflecting the probe stylus (2) out of its zero-position are dependent on the scanning direction of the probe stylus (2) on an object (O);
- when an object (0) is scanned with the free end of the probe stylus (2) in a first scanning direction, the measuring plate (10) may be tilted about a first rotational axis (D1), and in a second scanning direction about a second rotational axis (D2), the rotational axes (D1,D2) being at differing distances from the working line of the resetting force (F12);
- opposite the free end of the probe stylus (2) lies a sensor (7, 8,9) which detects the deflection of the probe stylus (2) from its zero-position caused by scanning the object (0) and converts it into a stroke (15) in which a deflection signal may be generated, the deflection paths (SA1, SA2), which lead to the generation of the deflection signal, being inversely proprotional to the above-mentioned forces (F1, F2), **characterised in that**
- the deflection paths of the end of the probe stylus (2) to deliver the deflection signal upon tilting about the two rotational axes (D1, D2) are at least roughly identical, the differing deflection paths caused by the geometrical arrangement of the support points (14, 16) being compensated by the deformation of the assembly probe stylus (2)/support (17), by the geometrical layout of the support (17), the geometrical design of the probe stylus (2) and the characteristics of their materials - i.e. the deformation parameters of the assembly probe stylus (2)/support (17) - being matched to one another.

**2.** Multi-coordinate touch probe according to claim 1, **characterised in that** the working line of the resetting force (F12) is the central axis of the probe stylus (2).

**3.** Multi-coordinate touch probe according to claim 1 or 2, **characterised in that** three support points (14, 16) are distributed uniformly along the circumference, and in that the first rotational axis ($D_1$) is at a distance ($l_1$) from the working line of the resetting force ($F_{12}$) and the second rotational axis ($D_2$) is at twice the distance ($l_2$) from the working line of the resetting force ($F_{12}$).

**4.** Multi-coordinate touch probe according to claim 3, **characterised in that** the different deflection paths are compensated by the bending of the probe stylus (2), the diameter ($T_D$) of the probe stylus (2) being selected at least approximately according to the following relationship:

$$T_D{}^4 = \frac{F_{12} \cdot l_1{}^2 \cdot L_2 \cdot 64 \cdot 2}{l_5 \cdot 3E \cdot \pi}$$

where

$F_{12}$ = resetting force
$l_1$ = distance of the first rotational axis from the working line of the resetting force ($F_{12}$)
$L_2$ = length of the probe stylus (2)
$l_5$ = stroke
$E$ = elasticity module of the probe stylus material

**Revendications**

**1.** Tête de mesure multi-coordonnées comprenant un stylet de palpeur (2) qui peut être déplacé dans un système de palier-support déterminant sa position zéro, sur lequel il est appliqué par une force de rappel ($F_{12}$), dans lequel

- le stylet (2) est fixé à un plateau de mesure (10) qui est monté pivotant dans un boîtier de palpeur (4) au moyen d'axes de rotation ($D_1$, $D_2$) qui forment le système de palier-support,
- le système de palier-support est un palier à plusieurs points comprenant plusieurs points d'articulation (14, 16) espacés,
- du fait des points d'articulation (14, 16) mutuellement éloignés les forces ($F_1$, $F_2$) pour déplacer le stylet de palpeur (2) par rapport à sa position zéro dépendent de la direction de palpage du stylet (2) sur un objet (O),
- lors d'un palpage de l'objet (O) à l'aide de l'extrémité libre du stylet de palpeur (2), dans une première direction de palpage, le plateau de mesure (10) peut basculer autour d'un premier axe de rotation ($D_1$) et, dans une deuxième direction de palpage, le plateau peut pivoter autour d'un deuxième axe de rotation ($D_2$), les axes de rotation ($D_1$, $D_2$) étant situés à des distances différentes de la ligne d'action de la force de rappel ($F_{12}$),
- en regard de l'extrémité libre du stylet de palpeur (2) est disposé un capteur (7, 8, 9) qui mesure la déviation du stylet de palpeur (2) par rapport à sa position zéro, induite par le palpage de l'objet et la convertit en une course (15) pour laquelle un signal de déviation est généré, les courses de déviation ($SA_1$, $SA_2$) entraînant la production du signal de déviation étant inversement proportionnelles aux forces ($F_1$, $F_2$) citées,

caractérisée en ce que

- les courses de déviation de l'extrémité du stylet de palpeur (2), pour délivrer le signal de déviation lors du pivotement autour des deux axes de rotation ($D_1$, $D_2$) sont au moins sensiblement égales, les différences de course de déviation engendrées par la disposition géométrique des points d'articulation (14, 16) étant compensées par la déformation du stylet de palpeur (2) et du système de palier-support (17), la conformation géométrique du stylet de palpeur (2) et les caractéristiques de matériau, c'est-à-dire les paramètres de déformation de l'ensemble stylet de palpeur (2)-système de palier-support (17) étant mutuellement adaptées.

**2.** Tête de palpeur multi-coordonnées selon la revendication 1, caractérisée en ce que la ligne d'action de la force de rappel ($F_{12}$) est l'axe médian du stylet de palpeur (2).

**3.** Tête de palpeur multi-coordonnées selon la revendication 1 ou 2, caractérisée en ce que trois paliers (14, 16) sont répartis de manière uniforme sur le pourtour et en ce que le premier axe de rotation ($D_1$) est disposé à distance ($l_1$) de la ligne d'action de la force de rappel ($F_{12}$) et le deuxième axe de rotation ($D_2$) est disposé à une distance ($l_2$) double de la ligne d'action de la force de rappel ($F_{12}$).

**4.** Tête de palpeur multi-coordonnées selon la revendication 3, caractérisée en ce que les différences de course de déviation sont compensées par la flexion du stylet de palpeur (2), le diamètre ($T_D$) du stylet de palpeur (2) étant choisi au sensiblement d'après la relation

$$T_D^4 = \frac{l_1^2 * L_2 * 64 * 2}{l_5 * 3E * \pi}$$

avec

F$_{12}$ =   force de rappel
l$_1$ =   distance du premier axe de rotation par rapport à la ligne d'action de la force de rappel F$_{12}$
l$_2$ =   longueur du stylet de palpeur (2)
l$_5$ =   course
E =   module d'élasticité

# FIG.1

FIG.2

$F_{12}$

7  9  8

14  $l_5$  14

$D_1$  $D_2$

16  16

2

$F_2$  $F_1$

0

FIG.3

$l_2 = 2\, l_1$

$D_1$

$l_1$

$D_2$

9

FIG.4